# EUROPÄISCHE PATENTSCHRIFT

(11) **EP 1 453 717 B1**
(45) Veröffentlichungstag und Bekanntmachung des Hinweises auf die Patenterteilung: **06.12.2006**
(21) Anmeldenummer: 02790290.7
(22) Anmeldetag: 15.10.2002
(51) Int. Cl.: B62D 5/04

(54) **ELEKTRISCHE HILFSKRAFTLENKUNG FÜR KRAFTFAHRZEUGE**
ELECTRIC SERVO-ASSISTED STEERING SYSTEM FOR MOTOR VEHICLES
DIRECTION ASSISTEE ELECTRIQUE POUR AUTOMOBILES

(30) Priorität: 15.12.2001 DE 10161715
(43) Veröffentlichungstag der Anmeldung: 08.09.2004
(73) Patentinhaber: ZF Lenksysteme GmbH, 73527 Schwäbisch Gmünd (DE)
(72) Erfinder: BERNHARD, Werner, 73563 Mögglingen (DE); SCHUST, Achim, 74405 Gaildorf (DE); HETZEL, Oliver, 73550 Waldstetten (DE); FISCHER, Joachim, 73529 Schwäbisch Gmünd-Bargau (DE)
(86) Internationale Anmeldenummer: PCT/EP2002/011494
(87) Internationale Veröffentlichungsnummer: WO 2003/051702

(56) Entgegenhaltungen:
- EP-A- 1 225 116
- DE-A- 10 123 767
- PATENT ABSTRACTS OF JAPAN vol. 2002, no. 07, 3. Juli 2002 (2002-07-03) & JP 2002 067991 A (KOYO SEIKO CO LTD), 8. März 2002 (2002-03-08)

## Beschreibung

Die Erfindung betrifft eine elektrische Hilfskraftlenkung für Kraftfahrzeuge mit einem Schneckenradgetriebe gemäß dem Oberbegriff von Anspruch 1.

Eine gattungsgemäße elektrische Hilfskraftlenkung für Kraftfahrzeuge ist aus der DE 199 44 133 A1 bekannt.

Die gattungsgemäße Schrift zeigt eine elektrische Hilfskraftlenkung mit einer Eingangswelle, die mit einem Lenkhandrad in Wirkverbindung steht und die zur Übertragung eines für das Lenken von zu lenkenden Rädern erforderlichen Drehmoments dient. Dabei steht ein Ausgangsglied mit den zu lenkenden Rädern in Wirkverbindung und wird durch einen elektrischen Antriebsmotor mit einer Hilfskraft beaufschlagt. Ein als Schnekkenradgetriebe ausgebildetes Untersetzungsgetriebe steht dabei mit dem elektrischen Antriebsmotor und dem Ausgangsglied in Wirkverbindung. Um die durch das Spiel im Schneckenradgetriebe entstehenden Geräusche zu eliminieren, ist eine Vorspanneinrichtung vorgesehen, die die Schnecke radial belastet bzw. vorspannt. Durch die leichte radiale Vorspannung zwischen der Schnecke und dem Schneckenrad wird das Spiel im Schneckenradgetriebe eliminiert. Bei der Auslegung der radialen Vorspannung muß diese dabei so abgestimmt sein, daß die entstehenden Reibungskräfte nicht zu einem Verklemmen des Schneckenradgetriebes führen.

Durch die gattungsgemäße Schrift wird zwar das Zahnflankenspiel verbessert, allerdings können die Kräfte, die im Betriebszustand zwischen der Schnecke und dem Schneckenrad auftreten, nicht vollständig kompensiert werden. Die maximale Vorspannung der Vorspannungseinrichtung ist begrenzt, da es ansonsten zu einer Verklemmung des Schneckenradgetriebes kommen würde. Die auftretenden Betriebskräfte liegen jedoch weit über der maximal möglichen Vorspannungskraft, die üblicherweise 15 bis 20 N beträgt.

Zum weiteren Stand der Technik wird ferner auf die DE 198 22 478 A1 verwiesen. Hierbei ist vorgesehen, daß ein elastischer Körper derart angeordnet ist, daß eine Drehwelle, wenn eine Zahnoberfläche der Schnecke mit einer Zahnoberfläche des Schneckenrads miteinander in Kontakt versetzt werden, unter Verformung des elastischen Körpers bewegt wird.

Ähnlich wie bei der gattungsgemäßen Schrift ist auch dadurch keine Kompensation der Betriebskräfte des Schneckenradgetriebes und somit keine vorteilhafte Geräuschreduzierung möglich.

Weitere Nachteile, die weder von den aus dem Stand der Technik bekannten Lösungen noch von den beiden zitierten Schriften gelöst werden, bestehen darin, daß sich der Verschleiß über die Lebenszeit vergrößert und sich somit das Zahnflankenspiel und damit die Klapper- und Vibrationsgeräusche weiter erhöhen. Eine Verschleißnachstellung ist nicht möglich.

In nachteilhafter Weise lassen sich die bekannten Lösungen auch nicht selbständig einstellen. Eine selbständige Einstellbarkeit der Schnecke zu dem Schnekkenrad, insbesondere im Neuzustand, würde eine deutliche Arbeitserleichterung und somit eine Kostenreduzierung bewirken.

Von Nachteil bei der bekannten Lösung ist außerdem, daß Temperaturschwankungen sowie Schwankungen der relativen Luftfeuchtigkeit, die sich aufgrund verschiedener Materialausdehnungskoeffizienten und Wasseraufnahmekoeffizienten unterschiedlich auf das Schneckenradgetriebe auswirken, nicht kompensiert werden können. Dies kann ebenfalls zu Klapper- und Vibrationsgeräuschen sowie zu einem Verspannen und -klemmen des Schneckenradgetriebes führen. Problematisch ist der Einfluß von Temperaturschwankungen auch deswegen, weil der verwendete Zahnkranz häufig aus Kunststoff gebildet ist und der dafür eingesetzte Kunststoff einen relativ hohen Temperaturausdehnungskoeffizienten aufweist. Dabei handelt es sich im allgemeinen um unverstärkte Kunststoffe, da diese sich hierfür am besten eignen, jedoch bei starken Temperaturschwankungen größeren Ausdehnungen unterworfen sind. Diese Ausdehnungen des Kunststoffes können dabei ein Verspannen des Schneckenradgetriebes zur Folge haben. Analog gilt dies auch bei der Aufnahme von Wasser aus der Luft und dem daraus resultierenden Aufquellen des Kunststoffes.

Der vorliegenden Erfindung liegt daher die Aufgabe zugrunde, die vorgenannten Nachteile des Standes der Technik zu lösen, insbesondere eine elektrische Hilfskraftlenkung für Kraftfahrzeuge mit einem Schneckenradgetriebe derart zu verbessern, daß die Geräusche auf ein Minimum reduziert werden, ein selbständiges Einstellen im Neuzustand und eine Verschleißnachstellung möglich ist und außerdem Temperaturschwankungen sowie Schwankungen der relativen Luftfeuchtigkeit ausgleichbar sind.

Diese Aufgabe wird erfindungsgemäß durch die kennzeichnenden Merkmale des Anspruchs 1 gelöst.

Dadurch, daß die Vorspanneinrichtung als hydraulische Druckeinrichtung ausgebildet ist, wird eine Trennung zwischen den verschiedenen Aufgabenstellungen, der Einstellung einer Vorspannkraft einerseits und der Aufnahme der Betriebskraft andererseits, erreicht. Mittels einer Vorspannkraft kann die Schnecke mit dem Schneckenrad spielfrei in Eingriff gehalten werden, während die Betriebskräfte durch die hydraulische Dämpfung kompensiert werden. Somit ist es möglich, eine geringe Vorspannkraft zu wählen und gleichzeitig durch die hydraulische Dämpfung eine derartige Dämpfung zu erreichen, daß problemlos hohe Betriebskräfte abgefangen werden können.

Einen zusätzlichen Vorteil bietet die hydraulische Druckeinrichtung bei der Montage des Lenksystems. Die hydraulische Druckeinrichtung stellt sich selbständig ein, so daß ein Einstellen des Zahnflankenspiels des Schneckenradgetriebes entfällt. Dies ermöglicht es, die erfindungsgemäße Vorrichtung getrennt zu montieren.

Dadurch, daß die Schnecke mittels einer Kupplung und einem in diesem Bereich angeordneten schwenkbaren Lager mit der Antriebswelle verbindbar ist, kann das Schneckenradgetriebe optimal und selbständig eingestellt werden. Der sich über die Lebenszeit einstellende Verschleiß kann somit selbständig kompensiert werden, so daß sich das Zahnflankenspiel nicht vergrößert und Klapper- und Vibrationsgeräusche vermieden werden. Schwankungen, die aus der relativen Luftfeuchtigkeit bzw. temperaturbedingt aus den verschiedenen Ausdehnungskoeffizienten der Materialien resultieren, können ebenfalls durch das selbständige Nachstellen, bedingt durch das schwenkbare Lager und die hydraulische Druckeinrichtung, selbständig kompensiert werden. Somit lassen sich zum einen Klapper-und Vibrationsgeräusche vermeiden und zum anderen wird ein Verspannen oder Verklemmen des Schneckenradgetriebes durch eine zu große Ausdehnung bestimmter Materialien zuverlässig verhindert.

Die erfindungsgemäße Lösung gewährleistet in vorteilhafter Weise einen spielfreien Verzahnungseingriff des Schneckenradgetriebes und eine Kompensation der auftretenden hohen Betriebskräfte.

Erfindungsgemäß kann ferner vorgesehen sein, daß die Schnecke durch eine Vorspannfeder, der hydraulischen Druckeinrichtung vorgespannt ist.

Wie sich in Versuchen herausgestellt hat, läßt sich durch die Vorspannfeder eine besonders effektive und kostengünstige Trennung der verschiedenen Aufgaben erreichen. Durch eine geeignete Einstellung der Vorspannfeder kann ein Zahnflankenspiel unterbunden werden, während gleichzeitig durch die hydraulische Komponente der hydraulischen Druckeinrichtung die auftretenden hohen Betriebskräfte kompensiert werden. Die Verzahnung der Schnecke wird somit mittels der Vorspannfeder spielfrei in den Verzahnungseingriff des Schneckenrades gedrückt.

Von Vorteil ist es, wenn das schwenkbare Lager als Vierpunktlager mit Schwenkring ausgebildet ist.

Durch diese Ausgestaltung sind einerseits größere Winkel zum Einstellen der Schnecke möglich und andererseits ist trotzdem eine axiale Spielfreiheit gewährleistet. Dadurch, daß kein axiales Spiel in den Lagern vorhanden ist, werden die Geräuschprobleme unterbunden. Der Vorteil herkömmlicher Vierpunktlager, der darin besteht, daß diese ein axial sehr kleines Spiel haben und somit keine Geräusche durch axiales Schlagen auftreten (d.h. Geräusche in Form von Kugelschlagen bei wechselnder Richtung der Axialkräfte), kann durch den Schwenkring genutzt werden. Die Eigenart herkömmlicher Vierpunktlager, daß diese nur sehr kleine Schiefstellungen der Welle, in diesem Fall der Schnekke, ermöglichen, wird in vorteilhafter Weise durch die Anordnung des Vierpunktlagers in dem Schwenkring überwunden. Somit ist es möglich die Schnecke axial mit kleinstem Spiel zu lagern und trotzdem eine große Schiefstellung zu realisieren, ohne daß erhöhte Reibwerte und Geräusche entstehen.

In vorteilhafter Weise ist dies dadurch möglich, daß der Außenring des Lagers ballig bzw. gerundet geschliffen wird und auf dem balligen Außenring des Vierpunktlagers ein Schwenkring montiert wird, der das Schwenken des Vierpunktlagers ermöglicht.

Vorteilhafte Weiterbildungen und Ausgestaltungen der Erfindung ergeben sich aus den weiteren Unteransprüchen und aus den nachfolgend anhand der Zeichnung prinzipmäßig dargestellten Ausführungsbeispielen.

Es zeigt:
- Fig. 1: einen Querschnitt durch ein Schneckenradgetriebe, das mit einer Antriebswelle eines elektrischen Antriebsmotors verbunden ist;
- Fig. 2: eine hydraulische Druckeinrichtung in einer ersten Ausführungsform;
- Fig. 3: eine hydraulische Druckeinrichtung in einer zweiten Ausführungsform;
- Fig. 4: einen Schnitt durch eine Kupplung mit zwei Blechumformteilen, die in ein Elastomer eingespritzt sind; und
- Fig. 5: eine Draufsicht auf die Blechumformteile gemäß Fig. 4.

Elektrische Hilfskraftlenkungen für Kraftfahrzeuge mit einem Schneckenradgetriebe sind hinlänglich, beispielsweise aus der DE 199 44 133 A1 bekannt, weshalb nachfolgend nur auf die erfindungswesentlichen Merkmale näher eingegangen wird.

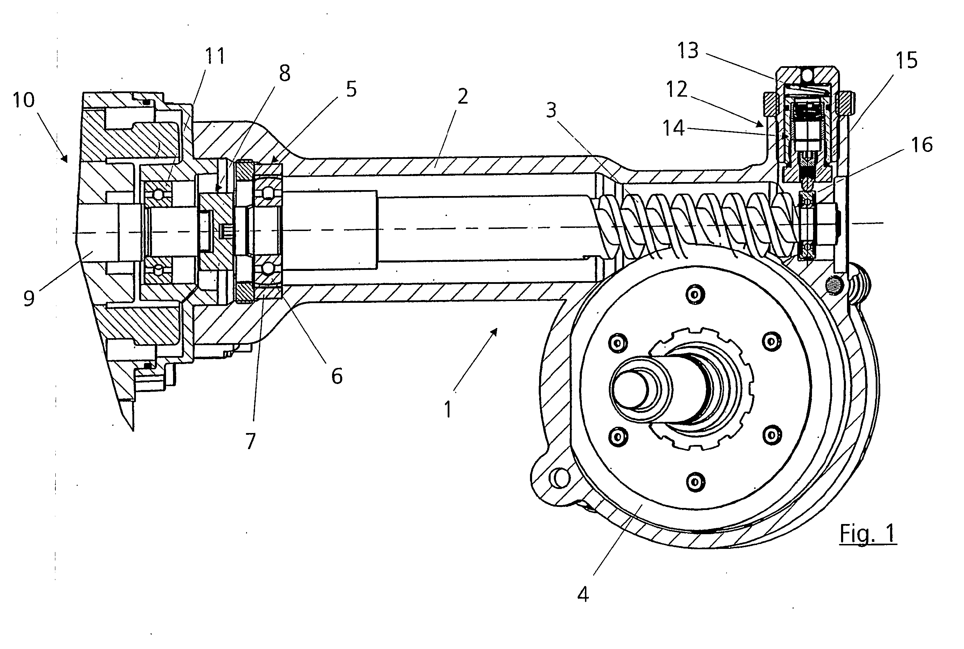

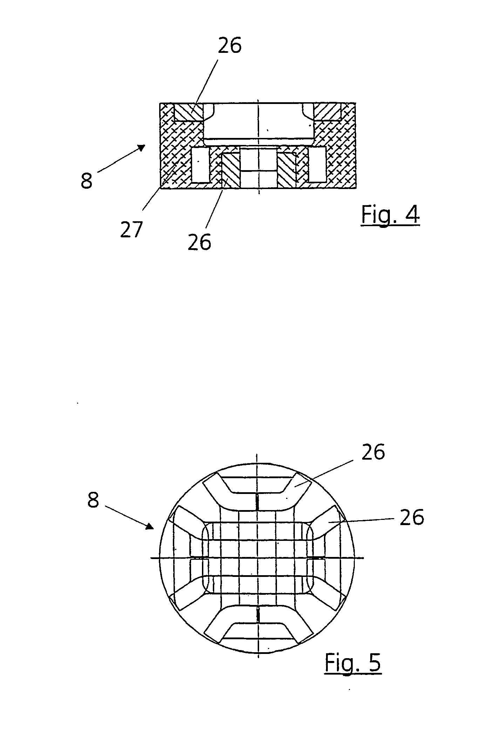

Fig. 1 zeigt einen Ausschnitt einer elektrischen Hilfskraftlenkung für Kraftfahrzeuge mit einem Schnekkenradgetriebe 1, das in einem Gehäuse 2 angeordnet ist. Das Schneckenradgetriebe 1 weist dabei eine Schnecke 3 und ein Schneckenrad 4 auf. Die Schnecke 3 ist in einem schwenkbaren Lager 5 gelagert. In dem vorliegenden Ausführungsbeispiel wird das schwenkbare Lager 5 aus einem Vierpunktlager 6; welches in einem Schwenkring 7 angeordnet ist, gebildet. Die Schnecke 3 ist mittels einer Kupplung 8, die in Fig. 4 und Fig. 5 näher dargestellt ist, mit einer Antriebswelle 9, die mit einem nicht näher dargestellten Antriebsmotor 10 in Wirkverbindung steht, verbunden. Die Antriebswelle 9 ist in üblicher Weise in einem Lager 11 gelagert.

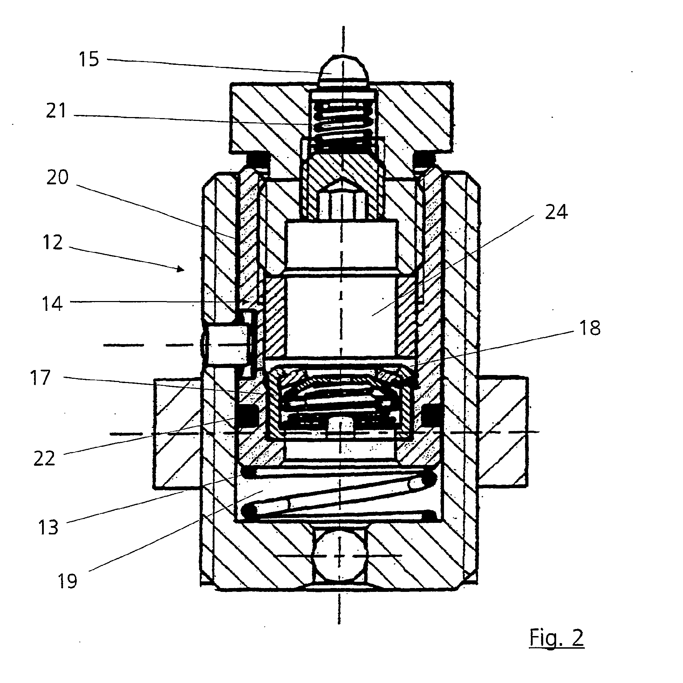

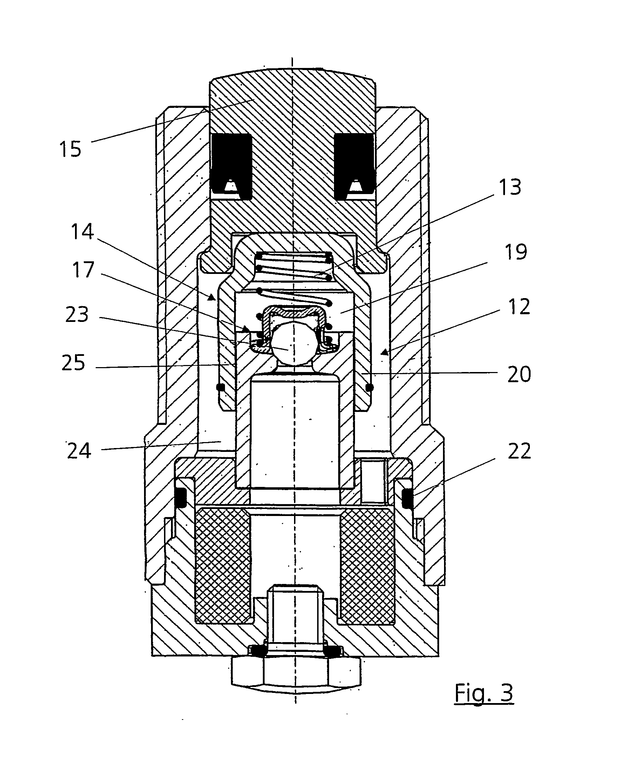

Wie aus Fig. 1 ebenfalls ersichtlich, wird die Schnekke 3 radial durch eine hydraulische Druckeinrichtung 12 beaufschlagt. Durch die hydraulische Druckeinrichtung 12 wird ein spielfreier Eingriff zwischen der Schnecke 3 und dem Schneckenrad 4 sowie eine Kompensation der auftretenden Betriebskräfte erreicht. Die Vorspannkraft wird dabei durch eine Vorspannfeder 13 aufgebracht. Für die Kompensation der auftretenden Betriebskräfte ist eine prinzipiell bekannte Hydraulikeinrichtung 14 der hydraulischen Druckeinrichtung 12 vorgesehen. Zwei vorteilhafte hydraulische Druckeinrichtungen 12 sind dabei aus den Figuren 2 und 3 ersichtlich.

Ein Druckstück 15 der hydraulischen Druckeinrichtung 12 wirkt auf ein in diesem Bereich angeordnetes Lager 16 der Schnecke 3 und beeinflußt so das Spiel zwischen der Schnecke 3 und dem Schneckenrad 4. Damit das Lager 16 bzw. die Schnecke 3 durch die hydraulische Druckeinrichtung 12 bzw. das Druckstück 15 entsprechend radial bewegt werden kann, ist die Anordnung in einer einfach vorstellbaren und deshalb nicht näher dargestellten Nut oder eines Langloches denkbar. Möglich ist außerdem der Einsatz geeigneter Lager, beispielsweise eines Pendellagers.

Aus Fig. 2 ist ein Rückschlagventil 17 mit einer Blendenbohrung 18 ersichtlich, das in der Hydraulikeinrichtung 14 eine prinzipielle bekannte Funktion übernimmt und somit einen Ölstrom aus einem Ölraum 19, falls dieser durch einen Kolben 20 entsprechend durch das Druckstück 15 belastet wird, lediglich gedrosselt durch die Blendenbohrung 18 abfließen läßt. Die in Fig. 2 dargestellte hydraulische Druckeinrichtung 12 ist prinzipiell von bekannter Bauart, weshalb lediglich auf die wesentlichen Merkmale eingegangen wurde. Zum Ausgleich von fertigungsbedingten Rundlaufabweichungen weist die hydraulische Druckeinrichtung 12 eine Druckfeder 21 auf, welche die hochdynamischen Anteile des Verzahnungsspiels zwischen der Schnecke 3 und dem Schneckenrad 4 ausgleicht.

Von Nachteil bei der in Fig. 2 dargestellten hydraulischen Druckeinrichtung 12 ist allerdings, daß bei einer entsprechenden Druckbeaufschlagung des Ölraumes 19, der dadurch entstehende Hochdruck auf den Dichtungsring 22 wirkt und somit bezüglich der Abdichtung hohe Anforderungen an diesen gestellt werden. Hierzu bietet die in Fig. 3 dargestellte hydraulische Druckeinrichtung 12 eine alternative vorteilhafte Lösung.

Die in Fig. 3 dargestellte hydraulische Druckeinrichtung 12 weist ein Rückschlagventil 17 auf, das mittels einer Kugel 23 den Ölraum 19, der mit Hochdruck beaufschlagt werden kann, von einem Niederdruckölraum 24 trennt. Die Funktionsweise ist dabei analog zu der bereits in Fig. 2 beschriebenen hydraulischen Druckeinrichtung 12 und prinzipiell bekannt. Durch eine entsprechende Bewegung des Druckstückes 15 wird entgegen der Kraft der Vörspannfeder 13 und durch das Rückschlagventil 17 ein Hochdruck im Ölraum 19 aufgebaut, der nur stark gedrosselt durch einen Spalt 25 entweichen kann. Dadurch werden die hohen Betriebskräfte zwischen der Schnecke 3 und dem Schneckenrad 4 kompensiert. Der Spalt 25 kann beispielsweise 3 µ betragen und ist zwischen einer Innenwand des Kolbens 20 und einer Außenwand des Gehäuses des Rückschlagventils 17 angeordnet. Durch die in Fig. 3 dargestellte Ausgestaltung wird die Dichtung 22 lediglich mit dem Druck im Niederdruckölraum 24 belastet.

Durch das Rückschlagventil 17 bzw. die Blendenbohrung 18 (Fig. 2) oder die Kugel 23 (Fig. 3), kann die Hydraulikeinrichtung 14 über eine definierte Zeitkonstante die Temperaturausdehnung und die Wasseraufnahme der Schnecke 3 kompensieren; indem der Kolben 20 definiert nachgeben kann.

Eine vorteilhafte Ankopplung der Schnecke 3 zur Antriebswelle 9 ist in den Figuren 4 und 5 dargestellt. Die Kupplung 8 ist dabei aus zwei Metall- bzw. Blechumformteilen 26, die in ein Elastomer 27 einvulkanisiert sind, gebildet. Die Blechumformteile 26 sind durch Mitnehmer so ausgeformt, daß sie bei Zerstörung des Elastomers 27 immer noch eine Notlaufeigenschaft bieten. Die Ankopplung an die Schnecke 3 bzw. die Antriebswelle 9 kann über rechteckige Mitnehmer auf den jeweiligen Wellen 3, 9 erfolgen.

Wie sich in Versuchen gezeigt hat, läßt sich eine derartige Kupplung 8 in besonders einfacher und kostensparender Weise realisieren. In vorteilhafter Weise werden die Blechumformteile 26, wie in Fig. 5 dargestellt, kreuzmäßig übereinander gelegt und anschließend einvulkanisiert. Die um 90° versetzte Anordnung der beiden Blechumformteile 26 hat sich dabei als besonders geeignet herausgestellt. Selbstverständlich können auch mehr Blechumformteile 26 in einer anderen Anordnung vorgesehen sein.

### Bezugszeichen

- 1: Schneckenradgetriebe
- 2: Gehäuse
- 3: Schnecke
- 4: Schneckenrad
- 5: schwenkbares Lager
- 6: Vierpunktlager
- 7: Schwenkring
- 8: Kupplung
- 9: Antriebswelle
- 10: Antriebsmotor
- 11: Lager (Antriebswelle)
- 12: hydraulische Druckeinrichtung
- 13: Vorspannfeder
- 14: Hydraulikeinrichtung
- 15: Druckstück
- 16: Lager (Schnecke)
- 17: Rückschlagventil
- 18: Blendenbohrung
- 19: Ölraum
- 20: Kolben
- 21: Druckfeder
- 22: Dichtungsring
- 23: Kugel
- 24: Niederdruckölraum
- 25: Spalt
- 26: Blechumformteile
- 27: Elastomer

## Patentansprüche

1. Elektrische Hilfskraftlenkung für Kraftfahrzeuge mit einem Schneckenradgetriebe, das mit einer Antriebswelle eines elektrischen Antriebsmotors in Wirkverbindung steht, wobei eine Schnecke durch eine Vorspanneinrichtung radial belastet ist,
**dadurch gekennzeichnet, daß**
die Vorspanneinrichtung als hydraulische Druckeinrichtung (12) ausgebildet ist und die Antriebswelle (9) mittels einer Kupplung (8) mit der Schnecke (3) verbindbar ist, wobei die Lagerung der Schnekke (3) in diesem Bereich über ein schwenkbares Lager (5) erfolgt.

2. Elektrische Hilfskraftlenkung nach Anspruch 1,
**dadurch gekennzeichnet, daß**
die Schnecke (3) durch eine Vorspannfeder (13) der hydraulischen Druckeinrichtung (12) vorgespannt ist.

3. Elektrische Hilfskraftlenkung nach Anspruch 1 oder 2,
**dadurch gekennzeichnet, daß**
die hydraulische Druckeinrichtung (12) ein Rückschlagventil (17) zur Dämpfung der radial wirkenden Betriebskräfte des Schneckenradgetriebes (1) aufweist.

4. Elektrische Hilfskraftlenkung nach Anspruch 1, 2 oder 3,
**dadurch gekennzeichnet, daß**
die hydraulische Druckeinrichtung (12) eine Druckfeder (21) zur Aufnahme hochdynamischer Kräfte des Schneckenradgetriebes (1) aufweist.

5. Elektrische Hilfskraftlenkung nach Anspruch 1, 2 oder 3,
**dadurch gekennzeichnet, daß**
das schwenkbare Lager (5) als Vierpunktlager (6) mit Schwenkring (7) ausgebildet ist.

## Claims

1. Electric servo-assisted steering system for motor vehicles with a worm gear mechanism, which is operatively connected to a drive shaft of an electric drive motor, a worm being radially loaded by a prestressing device, **characterized in that** the prestressing device is configured as a hydraulic pressure device (12) and the drive shaft (9) may be connected to the worm (3) by means of a coupling (8), the worm (3) being mounted in this region by a pivotable bearing (5).

2. Electric servo-assisted steering system according to claim 1, **characterized in that** the worm (3) is prestressed by a prestressing spring (13) of the hydraulic pressure device (12).

3. Electric servo-assisted steering system according to claim 1 or 2, **characterized in that** the hydraulic pressure device (12) comprises a non-return valve (17) for damping radially acting operating forces of the worm gear mechanism (1).

4. Electric servo-assisted steering system according to claim 1, 2 or 3, **characterized in that** the hydraulic pressure device (12) comprises a compression spring (21) for absorbing highly dynamic forces of the worm gear mechanism (1).

5. Electric servo-assisted steering system according to claim 1, 2 or 3, **characterized in that** the pivotable bearing (5) is configured as a four point bearing (6) with a pivot ring (7).

## Revendications

1. Direction assistée électrique pour véhicules automobiles comprenant une transmission par vis sans fin qui est en liaison active avec un moteur d'entraînement électrique, une vis sans fin étant sous contrainte radiale par un dispositif de précontrainte, **caractérisée en ce que** le dispositif de précontrainte est réalisé sous la forme d'un dispositif de pression hydraulique (12) et l'arbre d'entraînement (9) peut être relié avec la vis sans fin (3) au moyen d'un coupleur (8), le support de la vis sans fin (3) dans cette zone étant réalisé par un palier pivotant (5).

2. Direction assistée électrique selon la revendication 1, **caractérisée en ce que** la vis sans fin (3) est précontrainte par un ressort de précontrainte (13) du dispositif de pression hydraulique (12).

3. Direction assistée électrique selon la revendication 1 ou 2, **caractérisée en ce que** le dispositif de pression hydraulique (12) présente un clapet anti-retour (17) pour amortir les charges de service agissant dans le sens radial de la transmission par vis sans fin (1).

4. Direction assistée électrique selon la revendication 1, 2 ou 3, **caractérisée en ce que** le dispositif de pression hydraulique (12) présente un ressort de compression (21) pour absorber les forces dynamiques élevées de la transmission par vis sans fin (1) .

5. Direction assistée électrique selon la revendication 1, 2 ou 3, **caractérisée en ce que** le palier pivotant (5) est réalisé sous la forme d'un palier à quatre points (6) avec bague pivotante (7).
